Europäisches Patentamt

European Patent Office

Office européen des brevets

(11) Publication number : **0 501 675 A1**

# EUROPEAN PATENT APPLICATION

(21) Application number : 92301391.6

(22) Date of filing : 20.02.92

(51) Int. Cl.$^5$ : **E01H 1/08, A47L 9/08, A01G 1/12**

(30) Priority : **25.02.91 GB 9103861**

(43) Date of publication of application :
**02.09.92 Bulletin 92/36**

(84) Designated Contracting States :
**AT BE CH DE DK ES FR GB GR IT LI LU MC NL PT SE**

(71) Applicant : **ELECTROLUX NORTHERN LIMITED**
**Preston Road Aycliffe Industrial Estate**
**Newton Aycliffe Co. Durham, DL5 6UP (GB)**

(72) Inventor : **Dunn, Ken**
**70 Fulthorpe Avenue, Mowden Park**
**Darlington, Co. Durham (GB)**

(74) Representative : **Arthur, Bryan Edward et al**
**4 Dyers Buildings Holborn**
**London, EC1N 2JT (GB)**

(54) Improvements relating to collection devices.

(57) In particular, the collection device comprises a chassis (A), means for supporting the device above ground datum, a source (B1) for establishing a flow of air, a duct (B) directly or indirectly supported on the chassis (A) for conveying loose material entrained in a stream of air from said source (B1) towards a downstream region thereof from a collection mouth (2) at an upstream and thereof, a removable collection container (C) for collecting said loose material and disposed in proximity to the downstream region of the duct (B), at least one, air outlet (3) disposed adjacent the collection mouth (2), each aperture serving to direct least a portion of the stream of air downstream of the collection mouth (2) so as to draw loose material into the mouth (2) and transport the same via the duct (B) into the collection container (C).

Fig.2.

EP 0 501 675 A1

This invention relates to a collection device for use in collecting loose material from a surface.

More particularly the invention relates to a collection device for use in collecting loose material such as litter, debris, lawn cuttings and/or fallen leaves. Although the collection device is primarily intended for outdoor use, it may equally well be used indoors.

Existing collection devices such as domestic suction cleaners are primarily designed for cleaning upholstery and carpets and are not suitable for use outdoors. They are usually limited by weight, area of suction head and cross-sectional area of a tube connecting the suction head with a motor-driven fan for establishing the suction and the volume of a collection bag. Further, a large motor is required to overcome the various filters which are necessary whilst maintaining sufficient suction to extract/life dirt, debris etc., from a surface and transport it to the collection bag.

Known industrial and horticultural suction cleaners usually comprise an internal combustion engine, a fan and a collection bag. However, these devices are meant for use in an outdoor environment and are generally large and expensive whilst mobile, though not versatile.

In both of the above collection devices, collected loose material has to pass through the fan arrangement and this, not infrequently causes problems with larger items, such as empty drink cans. Further, a large amount of suction force is required to lift the loose material, thus necessitating a large, powerful fan motor which adds to the weight and cost of the device.

An aim of the present invention is to provide a collection device which is simple and relatively cheap to manufacture, and which does not have the problems of the prior art devices when handling various sizes of loose material.

According to the present invention there is provided a collection device comprising a chassis, means for supporting the device above ground datum, a source for establishing a flow of air, a duct directly or indirectly supported on the chassis for conveying loose material entrained in a stream of air from said source towards a downstream region thereof from a collection mouth at an upstream end thereof, a removable collection container for collecting said loose material and disposed in proximity at least one, air outlet disposed adjacent the collection mouth each aperture serving to direct at least a portion of the stream of air downstream of the collection mouth so as to draw loose material into the mouth and transport the same via the duct into the collection container.

The aperture arrangement establishes a positive air flow along the duct away from the collection mouth, causing air to be drawn into the collection mouth together with any loose material in the vicinity of the collection mouth.

Preferably, the collection container is detachably supported on the chassis. The loose material is then passed along the duct to the collection container at the downstream region of the duct under the agency of the air flow and since the duct is merely a passage with no fan or other auxiliary component causing at least a partial obstruction or a tortuous flow path, it can be formed to provide a relatively smooth path which facilitates the collection of a large variety of shapes and sizes of loose material. The fan may be driven electrically or by alternative power means, e.g. an internal combustion engine.

The collection container may be formed to house or may be constituted by a disposable plastic bag which can be easily detachably attached to the downstream region of the duct and including a filter outlet allowing the air flow to escape to atmosphere. Alternatively a loosely woven bag or a bag made from a pervious material may be used thereby obviating the need for a filter outlet.

The invention will now be described by way of example with reference to the accompanying drawings in which Figures 1, 1A and 1B illustrate in cross-section, a part of a duct and collection mouth, suitable for use in connection with collecting devices shown in figure 2 and 3;

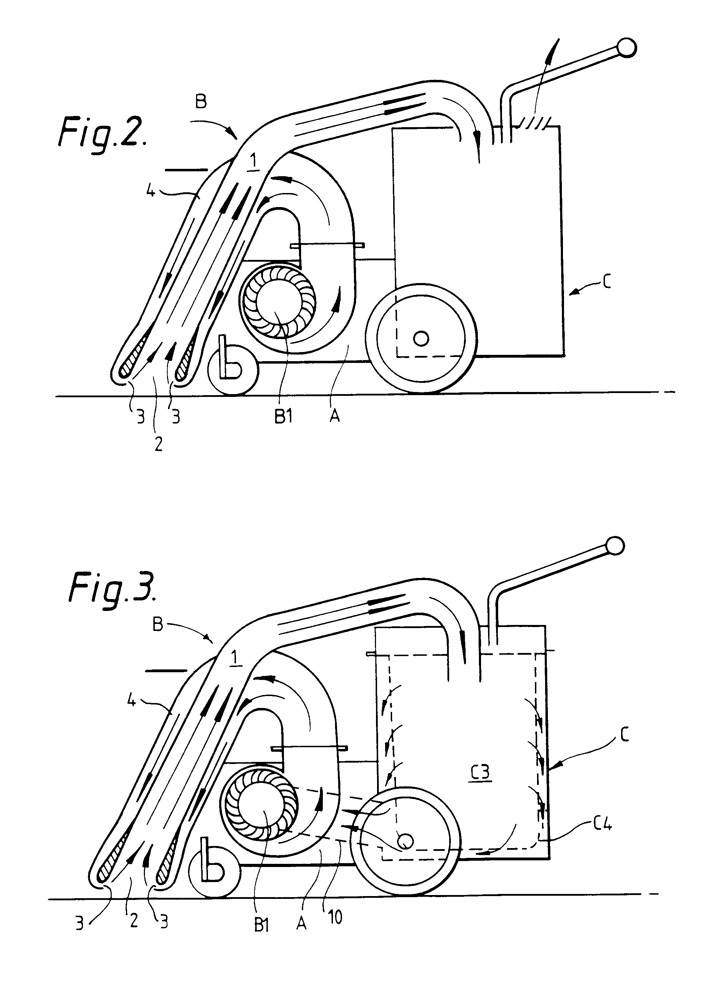

Figures 2 and 3 show, in diagrammatic longitudinal cross section, two forms of collecting device.

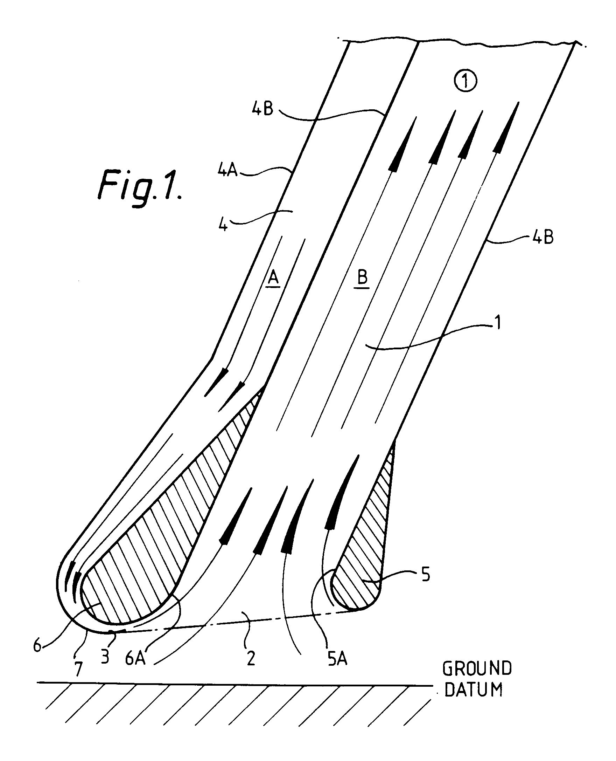

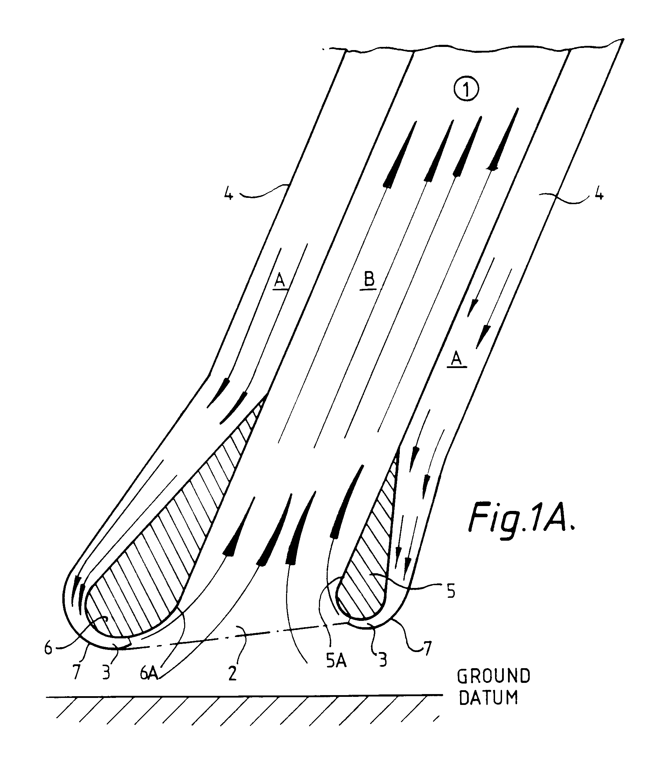

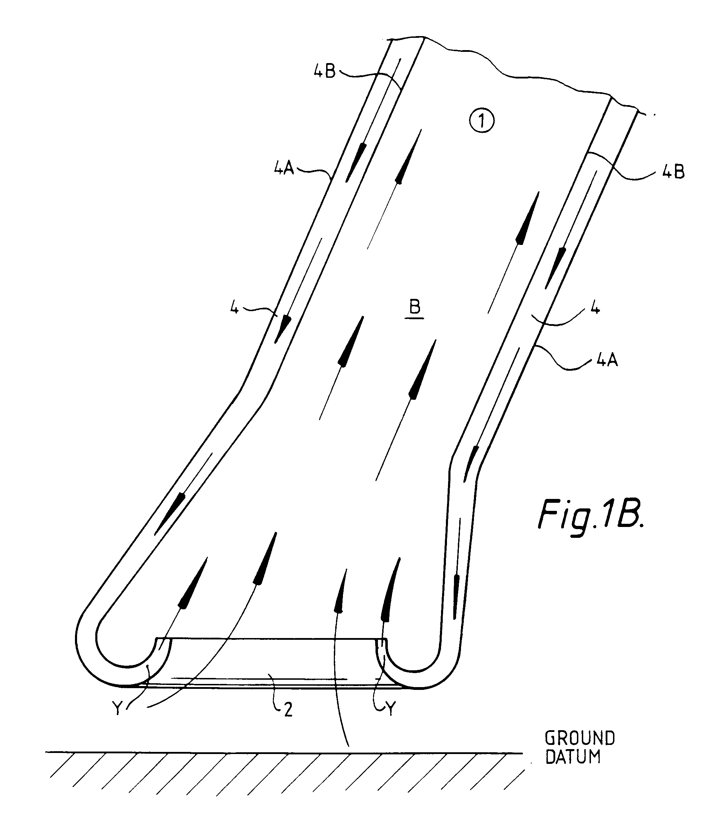

Referring to Figure 1, an elongate duct 1 presents a generally smooth internal surface for the passage of collected material there through from a collection mouth 2 disposed at an upstream end of the duct. The cross sectional shape of the duct 1 may be circular, rectangular, elliptical or polygonal. A plenum chamber 4 is constructed to at least partially surround the duct 1 and serves to direct pressure air in the direction of arrows A to an air outlet aperture 3. From Figure 1 it will be seen that the collection mouth is furnished with two generally aerofoil shaped portions 5 and 6 and that the nose of aerofoil portion 6 constitutes a generally convexly shaped air flow control surface which defines at least a portion of the air outlet aperture 3 together with a further generally convexly curved confronting number 7. The shape of the air outlet aperture 3 or at least those surfaces leading to the aperture are arranged to direct an air flow generally along the nose of the aerofoil section 6 so as to cause the air to flow along and against the respective curved surfaces. Due to the boundary layer effect and the provision of a smoothly curved air flow control surface, laminar and streamed lined air flow results so that a major part of the air from the outlet follows the profile of the curved surfaces into the duct, the remaining air disturbing any loose material such as grass cuttings located beneath the collection mouth 2 and facilitating entrainment of this loose material into the air flow and along the duct 1 in the direction of arrows B for collection by a collecting device.

A plurality of air outlet apertures 3 may be disposed around the complete collection mouth and in such a case, the plenum chamber 4 totally surrounds the elongate duct 1 and the collection mouth as shown in Figure 1A in which like parts bear the same reference numbers as in Figure 1. Entrainment of grass cuttings and other loose material into the elongate duct 1 is improved by the fact that the material will be closer to one part of the aerofoil sections mainly portions 5A and 6A than another. Thus the air flow through the gap remaining between the loose material and surfaces 5A and 6A will be increased causing a drop in air pressure in the gap and resulting in material being drawn nearer to the curved surfaces 5A and 6A, that is, lifted from the ground, so that the air flow into the duct 3 drawn in from atmosphere surrounding the collection mouth carries the material into and along the duct to the collection device.

Figure 1B is a modification Figure 1A and shows an air outlet Y, extending around the total internal periphery of the collection mouth 2. If desired the air outlet Y may consist of a plurality of individual air outlet apertures spaced around the collection mouth. Outlet 4A and the inner 4B walls of the plenum chamber 4 are so-shaped so that air leaving the air outlet Y forms a curtain of air which is directed downstream of the duct 1. The inner 4B and outer 4A wall of the plenum chamber 4 may converge towards the aperture Y to produce a venturi effect. If desired, the angle of exist of the air outlet Y may be varied to direct the curtain of air downstream and outwardly towards the internal wall 4B of the plenum chamber 4 which defines duct 1 or inwardly towards the longitudinal axis of the duct 1.

Referring to Figures 1 and 3 a wheeled chassis A has mounted thereon a collection system B and a litter collector C. Tthe litter collector C of the embodiment of Figure 2 is detachably removable from the chassis for disposal of the litter. Alternatively, a throw away bag for litter may be carried within the container C.

The collection system includes a turbo fan B1 which, when driven by a power source (not shown ) forces pressure air to a plenum chamber 4 surrounding a duct 1 see (also Figures 1, 1A and 1B) to one or more air outlet apertures 3. As described in copending UK Patent Application No. 9004076.7, which is imported in its entirety into this specification, litter isd drawn through a collection mouth 2 into duct 1 and thence into the container C.

In contrast to the embodiment of Figure 2, the embodiment of Figure 3 includes an additional duct 10 connecting the container C to the fan B1. In this embodiment the perforated collection bag C3 is housed within the container C and pressure air from the duct 1 and carrying entrained litter is screened prior to being returned to the fan B1. Screening may be achieved using a perforated bag or a bag made from pervious material. Alternatively, collection may be effected with a cage C4 made from a wire or other mesh of gauge sufficient to retain the litter. A semi closed circuit is therefore former.

If desired the collection structure of Figures 1A shown in Figures 2 and 3 may be replaced by the structure of either Figures 1 or Figure 1B.

## Claims

1. A collection device comprising a chassis, means for supporting the device above ground datum, a source for establishing a flow of air, a duct directly or indirectly supported on the chassis for conveying loose material entrained in a stream of air from said source towards a downstream region thereof from a collection mouth at an upstream and thereof, a removable collection container for collecting said loose material and disposed in proximity to the downstream region of the duct, at least one, air outlet disposed adjacent the collection mouth, each aperture serving to direct at least a portion of the stream of air downstream of the collection mouth so as to draw loose material into the mouth and transport the same via the duct into the collection container.

2. A collection device according to claim 1 wherein each aperture is shaped to direct at least a portion of the said stream of air transversely to the longitudinal axis of the duct.

3. A collection device according to claim 1 wherein each aperture is located within the collection mouth and is shaped so that at least a portion of the stream of air leaving each aperture is directed downstream and in a direction substantially parallel to the longitudinal axis of the duct.

4. A collection device according to claim 1 wherein each aperture is shaped so that at least a portion of the stream of air leaving each aperture is directed downstream and in a direction outwardly towards to interior of the duct.

5. A collection device according to any preceding claim wherein each aperture is shaped to produce a curtain of air within the duct.

6. A collection device according to claim 5 including a plurality of apertures wherein the apertures are disposed in an array which generally follows the internal cross-sectional shape of the collection mouth.

7. A collection device according to any preceding wherein each aperture is shaped as a venturi.

8. A collection device according to any preceding claim including an additional duct connecting the collection container to the source for establishing a flow of air, and a filter screen for screening air transported from the collection container to the said source.

Fig.1.

Fig.1A.

GROUND
DATUM

Fig.1B.

GROUND
DATUM

Fig.2.

Fig.3.

EP 0 501 675 A1

**European Patent Office**

# EUROPEAN SEARCH REPORT

Application Number

EP 92 30 1391

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 541 701 (GORENJE MUTA) | 1,3-5,7, 8 | E01H1/08 |
| Y | * figures * | 2,6 | A47L9/08 |
| | --- | | A01G1/12 |
| Y | US-A-2 916 761 (OBERG) | 2,6 | |
| A | * the whole document * | 1,4 | |
| | --- | | |
| X | GB-A-1 319 454 (BRADLEY LTD.) | 1,3-5,7 | |
| | * the whole document * | | |
| | --- | | |
| X | FR-A-1 159 333 (CONSTANTINESCU) | 1,2,4-7 | |
| | * the whole document * | | |
| | --- | | |
| X | DE-A-3 316 952 (BERGER) | 1,2,4,8 | |
| | * the whole document * | | |
| | ----- | | |
| | | | TECHNICAL FIELDS SEARCHED (Int. Cl.5) |
| | | | E01H |
| | | | A47L |
| | | | A01G |

The present search report has been drawn up for all claims

| Place of search | Date of completion of the search | Examiner |
|---|---|---|
| THE HAGUE | 28 APRIL 1992 | DIJKSTRA G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)